# EUROPEAN PATENT APPLICATION

(11) **EP 4 588 980 A1**
(43) Date of publication of application: **23.07.2025**
(21) Application number: 23865083.2
(22) Date of filing: 24.07.2023
(51) Int. Cl.: C09D 5/00, C08F 290/06

(54) **PHOTOCURABLE COATING COMPOSITION AND COATED ARTICLE**

(30) Priority: 12.09.2022 JP 2022144611
(71) Applicant: SHIN-ETSU CHEMICAL CO., LTD., Tokyo 1000005 (JP)
(72) Inventor: HIGUCHI, Koichi, Annaka-shi, Gunma 379-0224 (JP)
(74) Representative: Mewburn Ellis LLP
(86) International application number: PCT/JP2023/026986
(87) International publication number: WO 2024/057723

(57) **Abstract**

This photocurable coating composition comprises:
(A) an organopolysiloxane represented by formula (1) 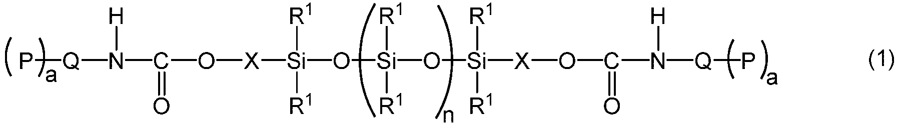 (each R¹ independently represents a hydrogen atom or a monovalent hydrocarbon group optionally having an oxygen atom or the like interposed therein, each X independently represents a divalent saturated hydrocarbon group optionally having an oxygen atom or the like interposed therein, each Q independently represents a saturated hydrocarbon group having a valance of (a+1) and optionally having an oxygen atom or the like interposed therein, each P independently represents an acryloyloxy group or a methacryloyloxy group, each a independently represents an integer of 2-5, and n represents an integer of 0-100);
(B) an ultraviolet ray absorbing agent; and
(C) a photoinitiator.
The percentage content of component (A) expressed as nonvolatile matter is 30-99 mass%. The photocurable coating composition provides a coating film that has excellent abrasion resistant, water repellency, and antifouling properties, and that maintains such properties even when being used outdoors for a long period of time.

## Description

### TECHNICAL FIELD

The present invention relates to a photocurable coating composition and to a coated article.

### BACKGROUND ART

There has existed a need in recent years for, as protective coatings for a variety of substrate surfaces such as various plastics (polycarbonate, polymethyl methacrylate, polystyrene, polyester, polyolefin, epoxy resin, melamine resin, triacetyl cellulose resin, ABS resin, AS resin, norbornene resin), metals and wood, curable compositions which have excellent coating properties and are capable of forming cured films endowed with, for example, good appearance, transparency, abrasion resistance and surface glide, low curling tendency, and good adhesion and chemical resistance.

Instead of thermosetting compositions which have a relatively long curing time and require much energy, it is desired that the above properties be satisfied with photocurable compositions which can be cured in a shorter time with less energy.

Photocurable (meth)acrylate compositions that use polyfunctional (meth)acrylates are familiar as common photocurable coating compositions. Photocurable (meth)acrylate compositions include one or more polyfunctional (meth)acrylate and a photopolymerization initiator. The (meth)acrylic groups in the polyfunctional (meth)acrylate crosslink by way of photopolymerization, forming a film and thus manifesting excellent curability, abrasion resistance, hardness and chemical resistance.

By including within these photocurable (meth)acrylate coating compositions a fluorinated additive having, as a group with water-repelling and anti-soiling properties, a perfluoropolyether group, and also having a (meth)acrylic group, it is possible to obtain a coating endowed with, in addition to the above properties, water-repelling and anti-soiling properties (Patent Documents 1 to 3). Other known fluorinated additives include compounds in which cyclic polysiloxanes are connected by divalent perfluoropolyether chains (Patent Document 4).

In addition, curable compositions which, by including a small amount of a (meth)acryloyl group-containing polysiloxane, provide coatings having improved glide and fingerprint or oily stain wipeability are known (Patent Documents 5 to 7).

### PRIOR ART DOCUMENTS

### PATENT DOCUMENTS

Patent Document 1: JP-A 2007-145884
Patent Document 2: JP-A 2010-53114
Patent Document 3: JP-A 2010-138112
Patent Document 4: JP-A 2010-285501
Patent Document 5: JP No. 4910253
Patent Document 6: JP-A 2005-036018
Patent Document 7: JP-A 2008-081575

### SUMMARY OF INVENTION

### TECHNICAL PROBLEM

Another challenge with regard to photocurable (meth)acrylate coating compositions is enhancing the weather resistance, particularly in applications involving outdoor use.

In light of these circumstances, an object of the invention is to provide photocurable coating compositions that give films which are endowed with excellent abrasion resistance, water repellency and soiling resistance, and which moreover maintain these properties even in prolonged outdoor use. Another object of the invention is to provide coated articles obtained with such compositions.

### SOLUTION TO PROBLEM

The inventor has conducted intensive investigations aimed at achieving the above objects and discovered as a result that photocurable coating compositions containing components (A) to (C) below give films which are endowed with excellent abrasion resistance, water repellency and anti-soiling properties, and that these properties are retained even after weathering tests. This discovery ultimately led to the present invention.

Accordingly, the invention provides:
1. A photocurable coating composition which includes:
   (A) an organopolysiloxane of formula (1) below 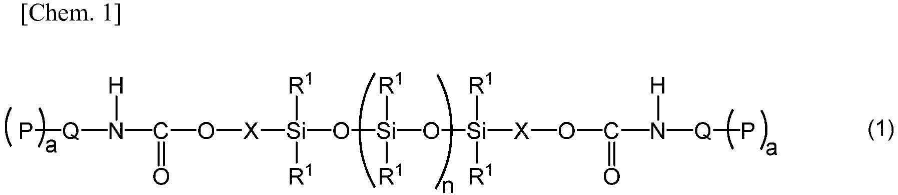 (wherein each R¹ is independently a hydrogen atom or a monovalent hydrocarbon group which may have an intervening oxygen atom,
      each X is independently a divalent saturated hydrocarbon group which may have one or more type of intervening atom selected from oxygen, nitrogen, sulfur and phosphorus atoms,
      each Q is independently an (a+1)-valent saturated hydrocarbon group which may have one or more type of intervening atom selected from oxygen, nitrogen, sulfur, phosphorus and silicon atoms,
      each P is independently an acryloyloxy group or methacryloyloxy group,
      each occurrence of the subscript 'a' is independently an integer from 2 to 5, and
      n is an integer from 0 to 100);
   (B) an ultraviolet absorber, and
   (C) a photopolymerization initiator;
   wherein the content of component (A) is from 30 to 99 wt% (nonvolatiles basis);
2. The photocurable coating composition of 1 above, wherein R¹ is a methyl group;
3. The photocurable coating composition of 1 above, wherein each X is independently a divalent saturated hydrocarbon group of 2 to 30 carbon atoms which may have an intervening oxygen atom;
4. The photocurable coating composition of 3 above, wherein X is a group of formula (2) below 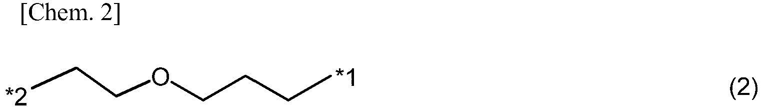 (wherein *1 is bonded to a silicon atom in formula (1) and *2 is bonded to an oxygen atom in a urethane group in formula (1));
5. The photocurable coating composition of 1 above, wherein each Q is independently an (a+1)-valent saturated hydrocarbon group of 4 to 30 carbon atoms which has a urethane bond;
6. The photocurable coating composition of 1 above, wherein n is an integer from 1 to 80;
7. The photocurable coating composition of 1 above, wherein component (B) is an ultraviolet absorber having a (meth)acryloyl group;
8. The photocurable coating composition of 1 above, further including:
   (D) one or more substance selected from organopolysiloxanes which have (meth)acryloyl groups and do not have urethane bonds, and silica particles that are surface-modified with an alkoxysilane which has a (meth)acryloyl group and does not have a urethane bond;
9. The photocurable coating composition of 1 above, further including:
   (E) a (meth)acrylate compound having no silicon atoms (exclusive of component (B));
10. A cured film of the photocurable coating composition of any of 1 to 9 above;
11. A coated article having a substrate and, formed directly on the substrate or over at least one other layer, the cured film of the photocurable coating composition according to 10 above; and
12. The coated article of 11 above, wherein the substrate is an organic resin or wood.

### ADVANTAGEOUS EFFECTS OF INVENTION

By virtue of this invention, there can be provided photocurable coating compositions which give films that exhibit excellent abrasion resistance, water repellency and soiling resistance, and that moreover retain these properties even with long-term outdoor use.

### DESCRIPTION OF EMBODIMENTS

The invention is described more fully below.

The photocurable coating composition of the invention includes (A) an organopolysiloxane having, at both ends through urethane bonds, a plurality of (meth)acryloyl groups, (B) an ultraviolet absorber and (C) a photopolymerization initiator.

### [1] Component (A)

Component (A) is an organopolysiloxane of general formula (1) below.

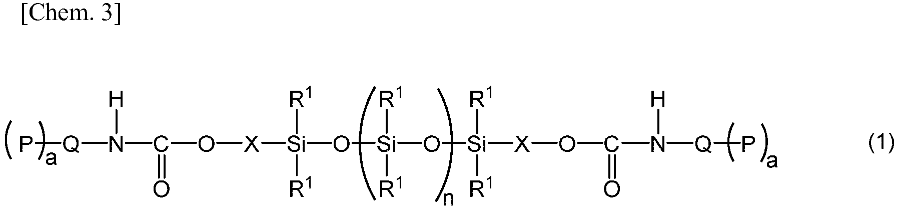

In formula (1), each R¹ is independently a hydrogen atom or a monovalent hydrocarbon group which may have one or more type of intervening oxygen atom, each X is independently a divalent saturated hydrocarbon group which may an intervening atom selected from oxygen, nitrogen, sulfur and phosphorus atoms, each Q is independently an (a+1)-valent saturated hydrocarbon group which may have one or more type of intervening atom selected from oxygen, nitrogen, sulfur, phosphorus and silicon atoms, each P is independently an acryloyloxy group or methacryloyloxy group, each occurrence of the subscript 'a' is independently an integer from 2 to 5, and n is an integer from 0 to 100.

The monovalent hydrocarbon group represented by R¹ may be linear, branched or cyclic, and is preferably one having from 1 to 20 carbon atoms.

Specific examples include alkyl groups such as methyl, ethyl, n-propyl, isopropyl, n-butyl, isobutyl, tert-butyl, n-hexyl, cyclohexyl, n-octyl, 2-ethylhexyl and n-decyl groups; alkenyl groups such as vinyl, allyl (2-propenyl), 1-propenyl, isopropenyl and butenyl groups; aryl groups such as phenyl, tolyl, xylyl and naphthyl groups; and aralkyl groups such as benzyl, phenylethyl and phenylpropyl groups.

Of these, a hydrogen atom, alkyl groups of 1 to 20 carbon atoms and aryl groups of 6 to 12 carbon atoms are preferred, alkyl groups of 1 to 10 carbon atoms are more preferred, alkyl groups of 1 to 5 carbon atoms are even more preferred, and a methyl group is still more preferred.

The monovalent hydrocarbon group may have, within the molecular chain or at the Si-side end, an intervening oxygen atom. For example, it may be an alkoxy group of 1 to 20 carbon atoms.

The divalent saturated hydrocarbon group represented by X which may have one or more type of intervening atom selected from oxygen, nitrogen, sulfur and phosphorus atoms may be linear, branched or cyclic. Alkylene groups of 1 to 20 carbon atoms, oxyalkylene groups of 1 to 20 carbon atoms and polyoxyalkylene groups of 1 to 20 carbon groups are preferred. Of these, taking into account, for example, the ease of synthesis and the availability of the starting materials, a group of the following formula (2) is more preferred. 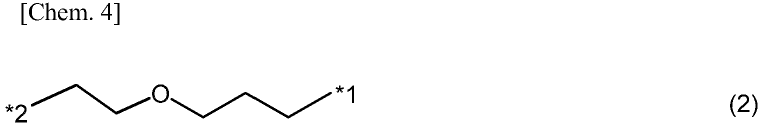 In this formula, *1 is bonded to a silicon atom in formula (1) and *2 is bonded to an oxygen atom in a urethane group in formula (1).

The (a+1)-valent, preferably trivalent to hexavalent, saturated hydrocarbon group represented by Q which may have at least one type of intervening atom selected from oxygen, nitrogen, sulfur, phosphorus and silicon atoms may be branched or cyclic. Examples include branched trivalent saturated hydrocarbon groups of 1 to 10 carbon atoms, such as -CH<, -CH₂CH<, -CH(CH₃)CH< and -C(CH₃)(CH₂-)₂; and branched or cyclic, trivalent to hexavalent saturated hydrocarbon groups of 4 to 30 carbon atoms which have a urethane bond, such as -(CH₂)₆-NHCO-O-R²(-)_{c}, -CH₂CH(CH₃)CH₂C(CH₃)₂CH₂CH₂-NHCO-O-R²(-)_{c}, -CH₂C(CH₃)₂CH₂CH(CH₃)CH₂CH₂-NHCO-O-R²(-)_{c} and -R³-NHCO-O-R²(-)_{c}. Here, the symbol "<" indicates that there are two bonds, and c is an integer from 2 to 5 representing the number of phosphorus atoms bonded to R².

R² above is a branched or cyclic, trivalent to hexavalent saturated hydrocarbon group which may have intervening oxygen and nitrogen atoms. Specific examples include -CH(CH₂-)₂, -CH₂-C(CH₂-)₃, -(CH₂CH₂O)_{d}-CH₂C(CH₂-)₃, -(CH₂CH₂O)_{d}-CH₂C(CH₂-(OCH₂CH₂)_{d}-)₃, -(CH₂CH(CH₃)O)_{d}-CH₂C(CH₂-(OCH(CH₃)CH₂)_{d}-)₃, -CH₂CH₂-Z-(CH₂CH₂-)₂, -CH₂CH₂-Z-(CH₂CH₂-)₂, -CH₂CH₂-Z-(CH₂CH₂O-C)=O)(CH₂)₅-O-)₂ and -CH₂-C(CH₂-)₂-CH₂OCH₂-C(CH₂-)₃. Here, Z is an isocyanurate structural residue [*3-C(=O)NC(=O)NC(=O)-*4], with *3 and *4 being mutually bonded to form a cyclic structure.

R³ above is preferably a cyclic trivalent to hexavalent saturated hydrocarbon group of 10 to 30 carbon atoms which may have intervening oxygen and nitrogen atoms, and is more preferably the residue obtained by removing the two isocyanate groups from isophorone diisocyanate.

Of these, taking into account, for example, the ease of synthesis and the availability of the starting materials, Q is more preferably a group represented by formulas (3) to (12) below.

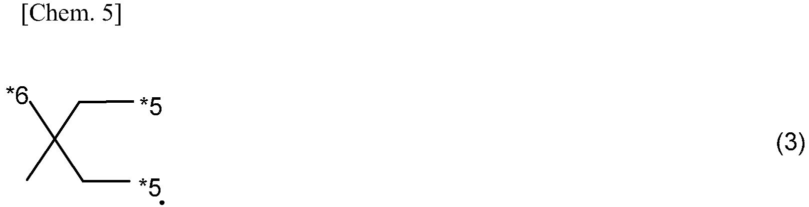

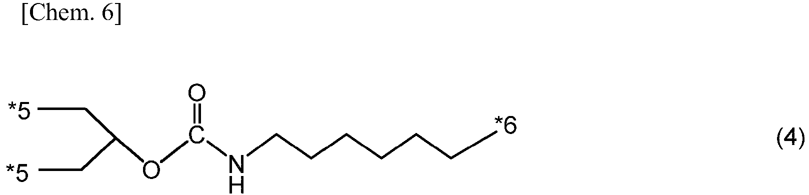

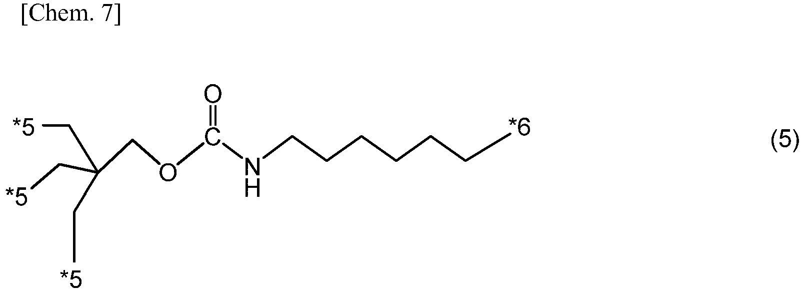

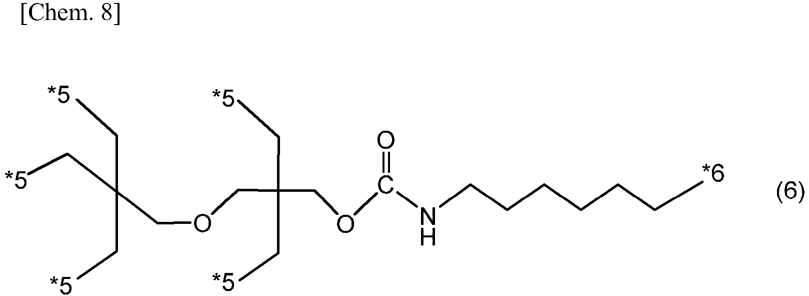

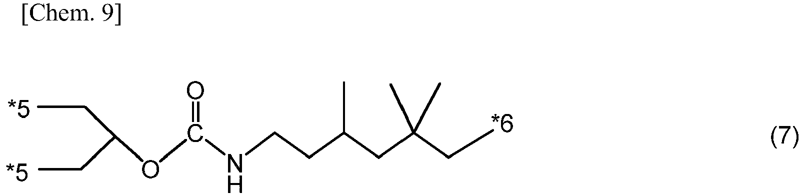

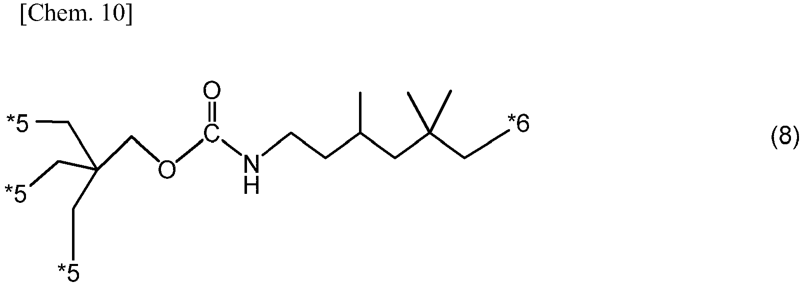

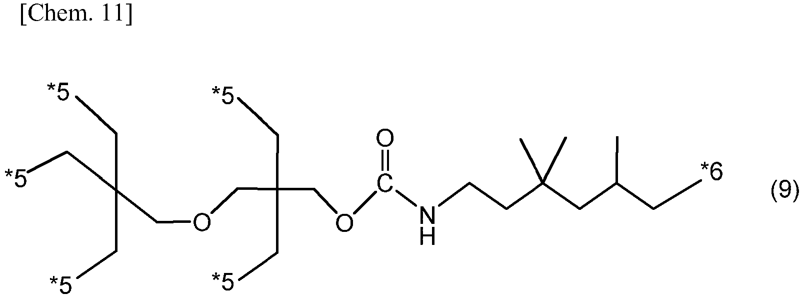

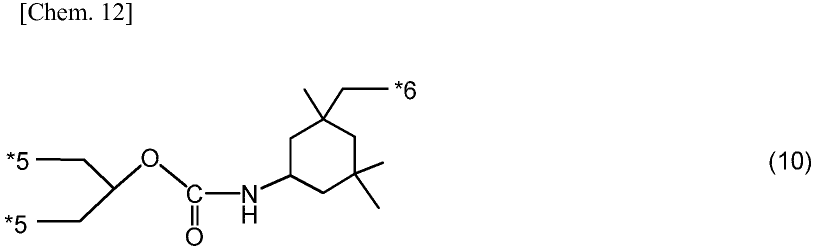

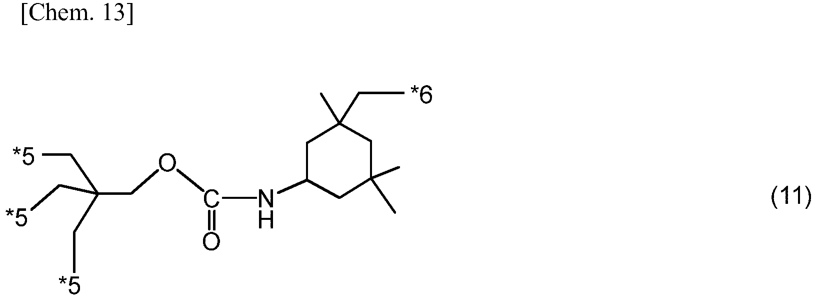

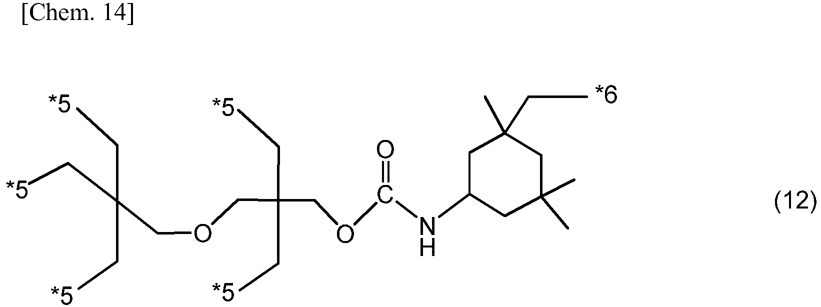

In formulas (3) to (12), *5 is bonded to P in formula (1) and *6 is bonded to a nitrogen atom in a urethane group in formula (1).

In formula (1), the subscript 'a' is an integer from 2 to 5, preferably an integer from 3 to 5, which represents the number of phosphorus atoms bonded to Q. When the subscript 'a' is less than 2, the curability of the composition and the abrasion resistance of the resulting film may be inadequate; when it is greater than 5, the film may have a poor crack resistance.

The subscript 'n' is an integer from 0 to 100, preferably an integer from 1 to 80, and more preferably an integer from 3 to 60. When n is greater than 100, the coating properties may worsen or appearance defects such as coating unevenness may arise in the film.

The component (A) content, based on the nonvolatile matter in the overall composition, is in the range of 30 to 99 wt%, and preferably from 35 to 80 wt%. At less than 30 wt%, the water repellency and soiling resistance of the resulting cured film may be inferior or the film may be unable to exhibit sufficient weather resistance. At more than 99 wt%, adhesion of the resulting cured film to the substrate may decrease.

### [2] Component (B)

Component (B) is an ultraviolet absorber. Although not particularly limited so long as it absorbs ultraviolet radiation, the ultraviolet absorber is exemplified by hydroxybenzophenones, hydroxybenzotriazoles and hydroxyphenyltriazines.

Specific examples include 2,4-dihydroxybenzophenone, 2,2',4,4'-tetrahydroxybnzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-n-benzyloxybenzophenone, 2,2'-dihydroxy-4,4'-dimethoxybenzophenone, 2,2'-dihydroxy-4,4'-diethoxybenzophenone, 2,2'-dihydroxy-4,4'-dipropoxybenzophenone, 2,2'-dihydroxy-4,4'-dibutoxybenzophenone, 2,2'-dihydroxy-4-methoxy-4'-propoxybenzophenone, 2,2'-dihydroxy-4-methoxy-4'-butoxybenzophenone, 2,3,4-trihydroxybenzophenone, 2-(2-hydroxy-5-t-methylphenyl)benzotriazole, 2-(2-hydroxy-5-t-octylphenyl)benzotriazole, 2-(2-hydroxy-3,5-di-t-butylphenyl)benzotriazole, ethyl-2-cyano-3,3-diphenylacrylate, 2-ethylhexyl-2-cyano-3,3-diphenylacrylate, 2-(2-hydroxy-4-hexyloxyphenyl)-4,6-diphenyltriazine, 2-[4-[(2-hydroxy-3-(2'-ethyl)hexyl)oxy]-2-hydroxyphenyl]-4,6-bis(2,4-dimethylphenyl)-1,3,5-triazine) and 2-[2-hydroxy-4-(1-octyloxycarbonylethoxy)phenyl]-4,6-bis(4-phenylphenyl)-1,3,5-triazine.

Component (B) is preferably an ultraviolet absorber having a (meth)acryloyloxy group. When component (B) is such an ultraviolet absorber, owing to the formation of crosslinks with above component (A) and other (meth)acrylate compounds, it is incorporated without bleeding or shedding from the film, enabling long-term weather resistance to be achieved.

Specific examples of hydroxybenzophenones having a (meth)acryloyloxy group include 2-hydroxy-4-(2-(meth)acryloxyethoxy)benzophenone,
2-hydroxy-4-(4-(meth)acryloxybutoxy)benzophenone,
2,2'-dihydroxy-4-(2-(meth)acryloxyethoxy)benzophenone,
2,4-dihydroxy-4'-(2-(meth)acryloxyethoxy)benzophenone,
2,2',4-trihydroxy-4'-(2-(meth)acryloxyethoxy)benzophenone,
2-hydroxy-4-(3-(meth)acryloxy-2-hydroxypropoxy)benzophenone and
2-hydroxy-4-(3-(meth)acryloxy-1-hydroxypropoxy)benzophenone.

Specific examples of hydroxybenzotriazoles having a (meth)acryloyloxy group include 2-(2'-hydroxy-5'-(meth)acryloxyphenyl)-2H-benzotriazole, 2-(2'-hydroxy-3'-tert-butyl-5'-(meth)acryloxymethylphenyl)-2H-benzotriazole, 2-[2'-hydroxy-5'-(2-(meth)acryloxyethyl)phenyl]-2H-benzotriazole, 2-[2'-hydroxy-3'-tert-butyl-5'-(2-(meth)acryloxyethyl)phenyl]-5-chloro-2H-benzotriazole and 2-[2'-hydroxy-3'-methyl-5'-(8-(meth)acryloxyoctyl)phenyl]-2H-benzotriazole.

Specific examples of hydroxyphenyltriazines having a (meth)acryloyloxy group include the reaction product of 2-[4-[(2-hydroxy-3-(2'-ethyl)hexyl)oxy]-2-hydroxyphenyl]-4,6-bis(2,4-dimethylphenyl)-1,3,5-triazine) and 2-acryloyloxyethyl isocyanate (e.g., Synthesis Example 1 in JP No. 6354665), the reaction product of 2-[4-[(2-hydroxy-3-(2'-ethyl)hexyl)oxy]-2-hydroxyphenyl]-4,6-bis(2,4-dimethylphenyl)-1,3,5-triazine) and 1,1-bis(acryloyloxymethyl)ethyl isocyanate (e.g., Synthesis Example 1 in JP 6156214), the reaction product of 2-[4-{(hydroxy-3-dodecyloxypropyl)oxy}-2-hydroxyphenyl]-4,6-bis(2,4-dimethylphenyl)-1,3,5-triazine) and 2-acryloyloxyethyl isocyanate, and the reaction product of 2-[4-{(hydroxy-3-dodecyloxypropyl)oxy}-2-hydroxyphenyl]-4,6-bis(2,4-dimethylphenyl)-1,3,5-triazine) and 1,1-bis(acryloyloxymethyl)ethyl isocyanate.

Two or more of these ultraviolet absorbers may be used together.

The content of component (B), from the standpoint of weather resistance and film appearance, is preferably from 10 to 30 wt%, and more preferably from 15 to 20 wt%, of the nonvolatile matter in the overall composition.

### [3] Component (C)

The photopolymerizable initiator of component (C) may be suitably selected from the standpoint of compatibility within the coating composition and curability. Specific examples include carbonyl compounds such as benzoin, benzoin monomethyl ether, benzoin isopropyl ether, acetoin, benzil, benzophenone, p-methoxybenzophenone, diethoxyacetophenone, benzyl dimethyl ketal, 2,2-diethoxyacetophenone, 1-hydroxycyclohexyl phenyl ketone, methyl phenyl glyoxylate and 2-hydroxy-2-methyl-1-phenylpropan-1-one; sulfur compounds such as tetramethylthiuram monosulfide and tetramethylthiuram disulfide; phosphorus compounds such as (2,4,6-trimethylbenzoyl)diphenylphosphine oxide, (2,4,6-trimethylbenzoyl)phenylethoxyphosphine oxide, bis(2,4,6-trimethylbenzoyl)phenylphosphine oxide and bis(2,6-dimethoxybenzoyl)-2,4,4-trimethylpentylphosphine oxide; and 2-benzyl-2-dimethylamino-1-(4-morpholinophenyl)butanone-1 and camphorquinone. One of these may be used alone, or two or more may be used together and combined in accordance with the desired film performance.

In order to suitably set the cure rate of the resulting film, enhance the abrasion resistance of the cured film and its adhesion to the substrate, and prevent discoloration and a decrease in weather resistance, the content of component (C), based on the total nonvolatile matter within the composition, is preferably from 0.1 to 10 wt%, and more preferably from 1 to 8 wt%.

### [4] Component (D)

In order to improve, for example, the film transparency, abrasion resistance, substrate adhesion and durability, the photocurable coating composition of the invention may optionally include (D) one or more substance selected from organopolysiloxanes which have (meth)acryloyl groups and do not have urethane bonds, and silica particles that are surface-modified with an alkoxysilane which has a (meth)acryloyl group and does not have a urethane bond.

The organopolysiloxane which has (meth)acryloyl groups and does not have urethane bonds can be obtained by the (co)hydrolytic condensation of, for example, an alkoxysilane which has a (meth)acryloyl group and does not have a urethane bond, or a mixture of this with another silane.

Alternatively, the silica particles that are surface-modified with an alkoxysilane which has a (meth)acryloyl group and does not have a urethane bond can be obtained by, for example, the method of (co)hydrolytically condensing an alkoxysilane which has a (meth)acryloyl group and does not have a urethane bond, or a mixture of this with another silane, in the presence of colloidal silica, or the method of dry treating silica powder with these alkoxysilanes.

Specific examples of alkoxysilanes which have a (meth)acryloyl group and do not have a urethane bond include 3-(meth)acryloxypropylmethyldimethoxysilane, 3-(meth)acryloxypropyltrimethoxysilane, 2-(meth)acryloxyethyltrimethoxysilane, 2-(meth)acryloxyethyltriethoxysilane, (meth)acryloxymethyltrimethoxysilane, (meth)acryloxymethyltriethoxysilane, 3-(meth)acryloxypropylmethyldiethoxysilane, 3-(meth)acryloxypropyltriethoxysilane, 8-(meth)acryloxyoctyltrimethoxysilane and 8-(meth)acryloxyoctyltriethoxysilane.

Taking into account the compatibility with other ingredients and in order to obtain a film having excellent heat resistance, chemical resistance, durability and adhesion to substrates, it is suitable for component (D) to be a (co)hydrolytic condensate of 3-(meth)acryloxypropyltrimethoxysilane alone or with another silane or to be obtained by carrying out the (co)hydrolytic condensation of 3-(meth)acryloxypropyltrimethoxysilane alone or with another silane in the presence of colloidal silica. One of these may be used alone, or two or more may be used together and combined in accordance with the desired film performance.

When component (D) is used, taking into account the film transparency, abrasion resistance, adhesion to substrates, durability and other properties, the content thereof based on the total nonvolatile matter in the composition is preferably from 10 to 50 wt%, and more preferably from 20 to 40 wt%.

### [5] Component (E)

In order to enhance properties of the film such as transparency, abrasion resistance, substrate adhesion and durability, the photocurable coating composition of the invention may optionally include (E) a (meth)acrylate compound other than above components (A), (B) and (D) which has no silicon atoms.

Such (meth)acrylate compounds are exemplified by one or more (meth)acrylate, urethane (meth)acrylate, epoxy (meth)acrylate or polyester (meth)acrylate selected from monofunctional (meth)acrylates and polyfunctional (meth)acrylates. Of these, from the standpoint of productivity and durability, monofunctional and polyfunctional (meth)acrylates and urethane (meth)acrylates are preferred.

Specific examples of monofunctional (meth)acrylates include mono(meth)acrylates such as methyl (meth)acrylate, ethyl (meth)acrylate, butyl (meth)acrylate, propyl (meth)acrylate, n-butyl (meth)acrylate, i-butyl (meth)acrylate, t-butyl (meth)acrylate, hexyl (meth)acrylate, 2-ethylhexyl (meth)acrylate, lauryl (meth)acrylate, stearyl (meth)acrylate, morpholyl (meth)acrylate, 2-hydroxyethyl (meth)acrylate, 2-hydroxypropyl (meth)acrylate, 4-hydroxybutyl (meth)acrylate, glycidyl (meth)acrylate, dimethylaminoethyl (meth)acrylate, diethylaminoethyl (meth)acrylate, tricyclodecane (meth)acrylate, polyethylene glycol mono(meth)acrylate, cyclohexyl (meth)acrylate, tetrahydrofurfuryl (meth)acrylate, dicyclopentanyl (meth)acrylate, dicyclopentenyl (meth)acrylate, isobornyl (meth)acrylate, allyl (meth)acrylate, 2-ethoxyethyl (meth)acrylate, benzyl (meth)acrylate, phenoxyethyl (meth)acrylate and phenyl (meth)acrylate; and mono(meth)acrylate compounds such as the addition product of phthalic anhydride and 2-hydroxyethyl (meth)acrylate.

Specific examples of polyfunctional (meth)acrylates include neopentyl glycol di(meth)acrylate, ethylene glycol di(meth)acrylate polyethylene glycol (number of recurring units (abbreviated below as "k") = 2 to 15) di(meth)acrylate, polypropylene glycol (k = 2 to 15) di(meth)acrylate, polybutylene glycol (k = 2 to 15) di(meth)acrylate, 2,2-bis(4-(meth)acryloxyethoxyphenyl)propane, 2,2-bis(4-(meth)acryloxydiethoxyphenyl)propane, trimethylolpropane diacrylate, bis(2-(meth)acryloxyethyl)hydroxyethyl isocyanurate, trimethylolpropane tri(meth)acrylate, tris(2-(meth)acryloxyethyl) isocyanurate, pentaerythritol tri(meth)acrylate, pentaerythritol tetra(meth)acrylate, dipentaerythritol tetra(meth)acrylate, dipentaerythritol penta(meth)acrylate, dipentaerythritol hexa(meth)acrylate; epoxy poly(meth)acrylates such as epoxy di(meth)acrylates obtained by reacting a bisphenol A-type diepoxy compound with (meth)acrylic acid; urethane poly(meth)acrylates such as the urethane tri(meth)acrylate obtained by reacting 1,6-hexamethylene diisocyanate trimer with 2-hydroxyethyl (meth)acrylate, the urethane di(meth)acrylate obtained by reacting isophorone diisocyanate with 2-hydroxypropyl (meth)acrylate, the urethane hexa(meth)acrylate obtained by reacting isophorone diisocyanate with pentaerythritol tri(meth)acrylate, the urethane di(meth)acrylate obtained by reacting dicyclomethane diisocyanate with 2-hydroxyethyl (meth)acrylate, and the urethane di(meth)acrylate obtained by reacting the product of a urethane-forming reaction between dicyclomethane diisocyanate and a poly (k = 6 to 15) tetramethylene glycol with 2-hydroxyethyl (meth)acrylate; and polyester poly(meth)acrylates such as the polyester (meth)acrylate obtained by reacting trimethylolethane with succinic acid and (meth)acrylic acid, and the polyester (meth)acrylate obtained by reacting trimethylolpropane with succinic acid, ethylene glycol and (meth)acrylic acid.

Other additives may be added to the photocurable coating composition of the invention within ranges that do not compromise the advantageous effects of the invention.

Examples of such additives include anti-soiling agents, water repellency agents, leveling agents, colorants, pigments, antioxidants, anti-yellowing agents, bluing agents, antifoaming agents, thickeners, anti-settling agents, antistatic agents, surfactants, adhesion promoters, infrared absorbers, light stabilizers, flexibility-imparting agents, curing catalysts and metal oxide particles.

In addition, the photocurable coating composition of the invention may include an organic solvent. The organic solvent is preferably selected and used according to the coating method.

For example, in cases where the composition is to be used in spray coating, it is preferable to optionally combine an alcohol-type solvent such as isobutanol, a glycol-type solvent such as propylene glycol monomethyl ether, an ester-type solvent such as n-butyl acetate, a ketone-type solvent such as methyl isobutyl ketone and an aromatic solvent such as toluene, and set the viscosity of the coating composition to 20 mPa·s or less. In cases where the composition is to be applied by shower flow coating or dip coating, the viscosity of the coating composition is preferably set to 100 mPa·s or less.

In the case of a high-solids type coating composition in which the solids content exceeds 80 wt%, the solvent can be suitably selected while taking into account the solubility of the various additives.

A cured film can be produced by coating the photocurable coating composition of the invention onto various types of substrates and then curing the composition.

At the time of photocuring, the coating composition is applied so as to form a film of a specific thickness on the substrate and the solvent is evaporated as needed, after which the composition is subjected to UV irradiation, E-beam irradiation or the like using, for example, a high-pressure mercury-vapor lamp, metal halide lamp or LED lamp. Irradiation may be carried out in air or in a nitrogen, argon or other inert gas environment.

Examples of the substrate include, but are not particularly limited to, organic resin substrates such as plastic molded bodies, wood products, textiles, ceramics, glass, metal, and composites of these. The coating composition of the invention can be suitably used on various types of plastic materials.

In particular, the composition can be suitably used on, for example, polycarbonate resins, polystyrene resins, acrylic resins, modified acrylic resins, urethane resins, thiourethane resins, polycondensates of halogenated bisphenol A and ethylene glycol, acrylic urethane resins, halogenated aryl group-containing acrylic resins, sulfur-containing resins, polyalkylene terephthalate resins, cellulose resins, noncrystalline polyolefin resins, and composite resins of these.

Use can also be made of these resin substrates whose surfaces have been treated, such as those that have been chemical conversion treated, corona discharge treated, flame treated, plasma treated, or treated with an acid or alkali solution. Laminates in which the surface layer is coated with a type of resin differing from the substrate itself may also be used.

Specific examples of laminates include those produced by a co-extrusion or lamination process which have an acrylic resin layer or urethane resin layer present as the surface layer on a polycarbonate resin substrate and similarly produced laminates which have an acrylic resin layer present as the surface layer on a polyester resin substrate.

The coating composition may be applied directly onto the substrate surface or, where necessary, may be applied over a primer layer, ultraviolet absorption layer, printed layer, recording layer, infrared-shielding layer, pressure-sensitive adhesive layer, inorganic vapor deposition layer or the like.

Known coating methods such as spin coating, comma coating, lip coating, roll coating, die coating, knife coating, blade coating, rod coating, kiss coating, gravure coating, screen coating, dip coating and cast coating may be suitably used for applying the photocurable coating composition of the invention.

The thickness of the film produced from the photocurable coating composition of the invention is not particularly limited, although a thickness of from 0.1 to 50 µm is preferred in order to prevent film defects, enable sufficient abrasion resistance to be exhibited and also prevent cracks from arising. To exhibit good film hardness and abrasion resistance, achieve stable adhesion over a long period of time and discourage crack formation, a thickness of from 1 to 30 µm is more preferred.

In addition, where necessary, other coating layers such as an adhesive layer, ultraviolet absorbing layer, printed layer, recording layer, infrared-shielding layer, pressure-sensitive adhesive layer, inorganic vapor-deposited layer, water-and-oil repelling layer and hydrophilic anti-soiling layer may be formed on the surface of the cured film of the inventive photocurable coating composition.

As mentioned above, the cured film obtained from the photocurable coating composition of the invention has excellent abrasion resistance. However, to achieve an even higher level of abrasion resistance, an inorganic vapor-deposited layer may be coated on this film.

The inorganic vapor-deposited layer is not particularly limited, so long as it has been formed by a dry film-forming process. Examples include layers that are composed chiefly of one or more of various metals containing such elements as Si, Ti, Zn, Al, Ga, In, Ce, Bi, Sb, B, Zr, Sn and Ta, and oxides, nitrides and sulfides of these metals. Additional examples include also diamond-like carbon film layers having a high hardness and excellent insulating properties.

The method of forming an inorganic vapor-deposited film layer on the cured film is not particularly limited so long as it is a dry film-forming method. Examples include the following dry film-forming methods: physical vapor deposition processes such as resistive heating evaporation, electron beam evaporation, molecular beam epitaxy, ion beam deposition, ion plating and sputtering; and chemical vapor deposition (CVD) processes such as thermal CVD, plasma CVD, optical CVD, epitaxial CVD, atomic layer CVD and catalytic CVD.

Coated articles that have been coated with the cured form of the inventive coating composition thus obtained have excellent abrasion resistance and weather resistance, and particularly outstanding resistance to cracking under weathering.

The photocurable coating composition of the invention is preferably used as a photocurable coating composition for articles that are used outdoors.

In particular, use for surface coating automotive headlight lens, vehicle sensor covers and polycarbonate glass is preferred. These substrates are polycarbonate; polycarbonate is very commonly used because it has a high impact resistance, heat resistance, transparency and lightness. However, polycarbonate falls short in terms of performance attributes such as chemical resistance, weather resistance and abrasion resistance, and so it is desirable to coat the surface using the coating composition of the invention and thereby enhance these properties.

Polycarbonate coated with a film composed of the photocurable coating composition of the invention can prevent yellowing and film cracking on weathering, in addition to which it has excellent water repellency and soiling resistance, is lightweight and is easy to mold. Hence, it can be used in diverse applications, such as automotive headlight lenses, vehicle sensors, vehicle windows, outdoor signs, window glass for greenhouses and outdoor buildings, roofs for terraces and garages, balconies, and instrument covers.

### EXAMPLES

Examples and Comparative Examples are given below by way of illustration, although the invention is not limited by these Examples.

In the Examples below, "parts" and "%" refer respectively to parts by weight and percent by weight. The instruments used in the Examples were as follows.

(1) GPC Measurement Conditions

| | |
|---|---|
| Apparatus: | HLC-8320 GPC, from Tosoh Corporation |
| Columns: | TSKgel G4000HXL + G3000HXL + G2000HXL + G2000HXL |
| | (inside diameter, 6 mm; length, 150 mm), from Tosoh Corporation |
| Developing solvent: | tetrahydrofuran |
| Column thermostat temperature: | 40°C |
| Flow rate: | 1 mL/min |
| Detector: | refractive index (RI) |
| Standard: | monodispersed polystyrene |

(2) Proton Nuclear Magnetic Resonance Spectrum (¹H-NMR) Measurement Conditions

| | |
|---|---|
| Apparatus: | AVANCE III 400, from BRUKER |
| Solvent: | CDCl₃ |
| Internal standard: | tetramethylsilane (TMS) |

(3) Infrared Absorption Spectrum (IR) Measurement Conditions

| | |
|---|---|
| Apparatus: | Nicolet 6700, from Thermo Fisher Scientific, Inc. |

### [1] Organopolysiloxane Synthesis

### [Synthesis Example 1]

A 500 mL amber glass reactor equipped with a stirrer, thermometer, reflux condenser and dropping funnel was charged with 96.7 g of a dual-end type carbinol-modified dimethylpolysiloxane (KF-6001, from Shin-Etsu Chemical Co., Ltd.; hydroxyl value, 58 mgKOH/g; formula (13) below), 48.4 g of butyl acetate, 0.03 g of the polymerization inhibitor t-butylhydroxytoluene and 0.03 g of the urethane catalyst dioctyltin oxide, and the contents were stirred under heating until the internal temperature reached 70°C. To this was added dropwise over 1.5 hours under heating: 50.2 g of 1,1-(bisacryloyloxymethyl)ethyl isocyanate (Karenz BEI, from Showa Denko KK; molecular weight, 239). This was followed by 3 hours of reaction at 80°C, the addition of 10 g of methanol so as to deactivate remaining isocyanate groups, and 1 hour of reaction at 70°C. The mixture was cooled to 25°C and the IR spectrum was measured, whereupon the absorption peak for NCO (2,260 cm⁻¹) had substantially disappeared, confirming that the Karenz BEI serving as the starting material had been consumed. The mixture was then concentrated in vacuo to remove low-molecular-weight ingredients, and then filtered with a nylon mesh (100 mesh), yielding 156.8 g of clear, light-yellow organopolysiloxane A-1. This had a kinematic viscosity of 10,400 mPa·s, and the nonvolatiles content was 98.6%. The structure of A-1 as identified by GPC, ²⁹Si-NMR and IR measurement is shown in formula (14) below.

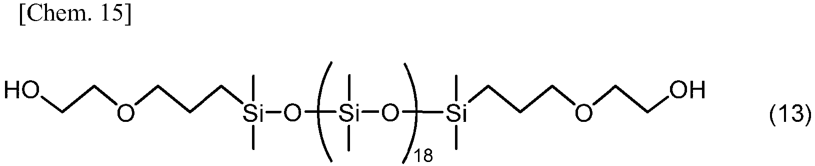

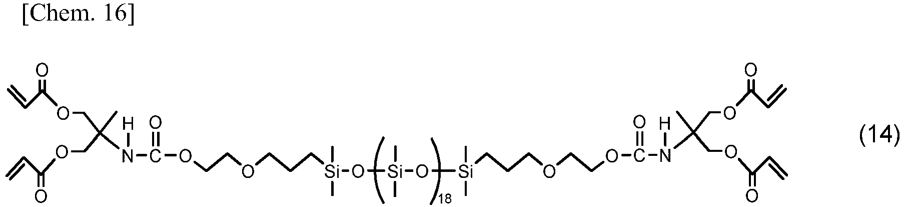

### [Synthesis Example 2]

A 500 mL amber glass reactor equipped with a stirrer, thermometer, reflux condenser and dropping funnel was charged with 48.8 g of a dual-end type carbinol-modified dimethylpolysiloxane (KF-6000, from Shin-Etsu Chemical Co., Ltd.; hydroxyl value, 115 mgKOH/g; formula (15) below), 48.8 g of butyl acetate, 0.03 g of the polymerization inhibitor t-butylhydroxytoluene and 0.03 g of the urethane catalyst dioctyltin oxide, and the contents were stirred under heating until the internal temperature reached 60°C. To this was added dropwise over 1 hour under heating: 22.2 g of isophorone diisocyanate (Desmodur I, from Covestro AG; molecular weight, 222). This was followed by 3 hours of reaction at 60°C, after which 80.7 g of a mixture of pentaerythritol triacrylate and pentaerythritol tetraacrylate (Miramer M340, from MIWON; mixing ratio, 57%/43%; hydroxyl value, 139 mgKOH/g) was added, the temperature was raised to 80°C and the contents were stirred for 3 hours. This was followed by the addition of 10 g of methanol so as to deactivate remaining isocyanate groups, and 1 hour of reaction at 80°C. The reaction mixture was cooled to 25°C, concentrated in vacuo to remove low-molecular-weight ingredients, and then filtered with a nylon mesh (100 mesh), yielding 147.6 g of clear, light-yellow organopolysiloxane A-2. This had a kinematic viscosity at 40°C of 37,100 mPa·s, and the nonvolatiles content was 97.5%. The structure of A-2 as identified by GPC, ¹H-NMR and IR measurement is shown in formula (16) below.

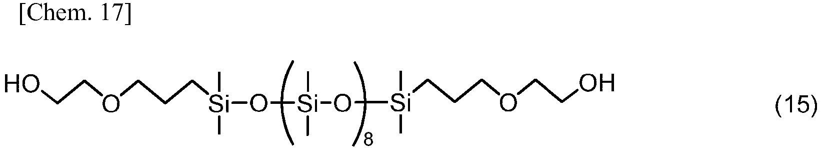

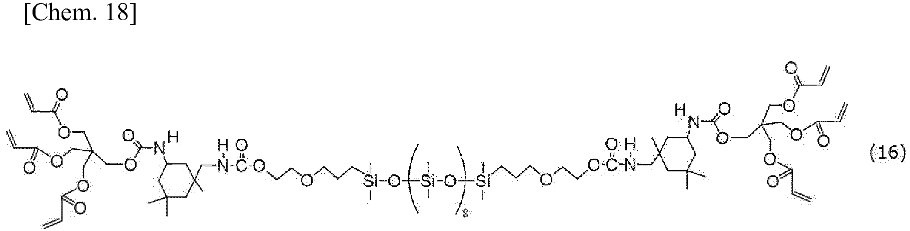

### [Synthesis Example 3]

A one-liter amber glass reactor equipped with a stirrer, thermometer, reflux condenser and dropping funnel was charged with 155.8 g of a dual-end type carbinol-modified dimethylpolysiloxane (KF-6002, from Shin-Etsu Chemical Co., Ltd.; hydroxyl value, 36 mgKOH/g; formula (17) below), 155.8 g of butyl acetate, 0.05 g of the polymerization inhibitor t-butylhydroxytoluene and 0.05 g of the urethane catalyst dioctyltin oxide, and the contents were stirred under heating until the internal temperature reached 60°C. To this was added dropwise over 1 hour under heating: 22.2 g of isophorone diisocyanate (Desmodur I, from Covestro AG; molecular weight, 222). This was followed by 3 hours of reaction at 60°C, after which 224.4 g of a mixture of dipentaerythritol pentaacrylate and dipentaerythritol hexaacrylate (A-9550, from Shin-Nakamura Chemical Co., Ltd.; hydroxyl value, 50 mgKOH/g) was added, the temperature was raised to 80°C and the contents were stirred for 3 hours. This was followed by the addition of 10 g of methanol so as to deactivate remaining isocyanate groups, and 1 hour of reaction at 80°C. The reaction mixture was cooled to 25°C, concentrated in vacuo to remove low-molecular-weight ingredients, and then filtered with a nylon mesh (100 mesh), yielding 379.6 g of clear, light-yellow organopolysiloxane A-3. This had a kinematic viscosity at 40°C of 68,400 mPa·s, and the nonvolatiles content was 98.2%. The structure of A-3 as identified by GPC, ¹H-NMR and IR measurement is shown in formula (18) below.

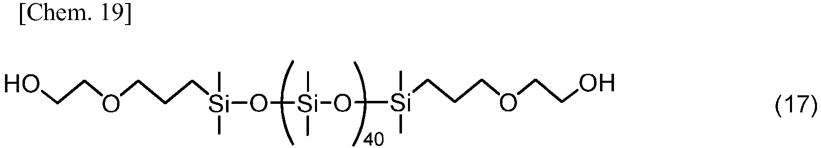

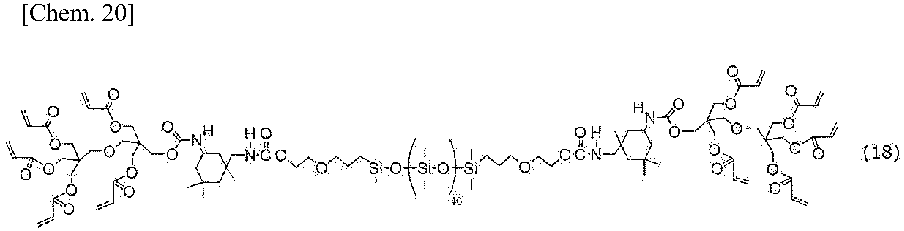

### [Comparative Synthesis Example 1]

A 500-mL amber glass reactor equipped with a stirrer, thermometer, reflux condenser and dropping funnel was charged with 48.8 g of a dual-end type carbinol-modified dimethylpolysiloxane (KF-6000, from Shin-Etsu Chemical Co., Ltd.; hydroxyl value, 115 mgKOH/g; formula (15) below), 48.8 g of butyl acetate, 0.03 g of the polymerization inhibitor t-butylhydroxytoluene and 0.03 g of the urethane catalyst dioctyltin oxide, and the contents were stirred under heating until the internal temperature reached 60°C. To this was added dropwise over 1 hour under heating: 22.2 g of isophorone diisocyanate (Desmodur I, from Covestro AG; molecular weight, 222). This was followed by 3 hours of reaction at 60°C, after which 23.2 g of 2-hydroxyethyl acrylate (Tokyo Chemical Industry Co., Ltd.; molecular weight, 116) was added, the temperature was raised to 80°C and the contents were stirred for 3 hours. This was followed by the addition of 10 g of methanol so as to deactivate remaining isocyanate groups, and 1 hour of reaction at 80°C. The reaction mixture was cooled to 25°C, concentrated in vacuo to remove low-molecular-weight ingredients, and then filtered with a nylon mesh (100 mesh), yielding 90.8 g of clear, light-yellow organopolysiloxane A-4. This had a kinematic viscosity of 820 mPa·s, and the nonvolatiles content was 98.1%. The structure of A'-4 as identified by GPC, ¹H-NMR and IR measurement is shown in formula (19) below.

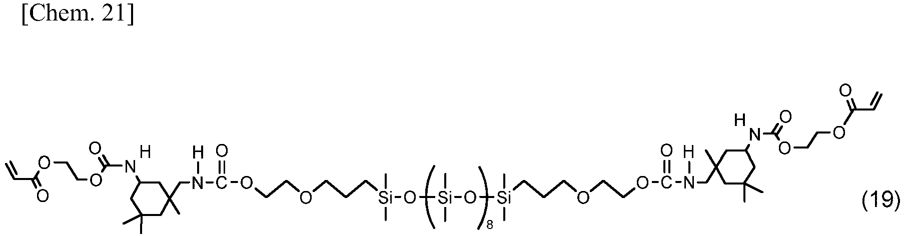

### [Synthesis Example 4] Synthesis of Organopolysiloxane D-1 Having (Meth)Acryloyl Groups and No Urethane Bonds

Acryloyloxypropyltrimethoxysilane (142 g; KBM 5103, from Shin-Etsu Chemical Co., Ltd.), 500 g of isopropyl alcohol, 0.1g of p-methoxyphenol, 1.0 g of tetramethylammonium hydroxide and 20 g of deionized water were mixed together and then reacted at 20°C for 24 hours, giving a clear, colorless liquid. This was concentrated by vacuum distillation, yielding organopolysiloxane D-1 as a clear, colorless liquid.

### [Synthesis Example 5]

A mixture of 2.8 g of acryloyloxypropyltrimethoxysilane (KBM 5103, from Shin-Etsu Chemical Co., Ltd.), 95.6 g of methyl ethyl ketone-dispersed silica sol (MEK-ST, from Nissan Chemical Industries, Ltd.; number mean particle diameter, 45 nm; silica concentration, 30%) and 0.1 g of deionized water was stirred for 3 hours at 80°C, following which 1.4 g of trimethyl o-formate was added and stirring under applied heat was carried out at the same temperature for 1 hour, giving a dispersion of surface-treated silica particles D-3. The solids content of the resulting dispersion was 32 wt%, and the mean particle diameter of the surface-treated silica particles D-3 was 45 nm.

### [2] Preparation of Coating Compositions and Production of Coated Articles

### [Examples 1-1 to 1-8, Comparative Examples 1-1 to 1-5]

Components (A) to (F) below were stirred and mixed together at 25°C in the amounts shown in Tables 1 and 2, following which filtration was carried out using filter paper, thereby preparing coating compositions (X1 to X8).

### Component (A)

| | |
|---|---|
| A-1: | The organopolysiloxane obtained in Synthesis Example 1 |
| A-2: | The organopolysiloxane obtained in Synthesis Example 2 |
| A-3: | The organopolysiloxane obtained in Synthesis Example 3 |
| A'-4 (comparative ingredient): | The organopolysiloxane obtained in Comparative Synthesis Example 1 |

### Component (B)

| | |
|---|---|
| B-1: | 2-[4-[(2-Hydroxy-3-(2'-ethyl)hexyl)oxy]-2-hydroxyphenyl]-4,6-bis(2,4-dimethylphenyl)-1,3,5-triazine (Tinuvin 405, from BASF) |
| B-2: | The compound of structural formula (20) below obtained by the method described in Synthesis Example 1 of JP No. 6354665. |

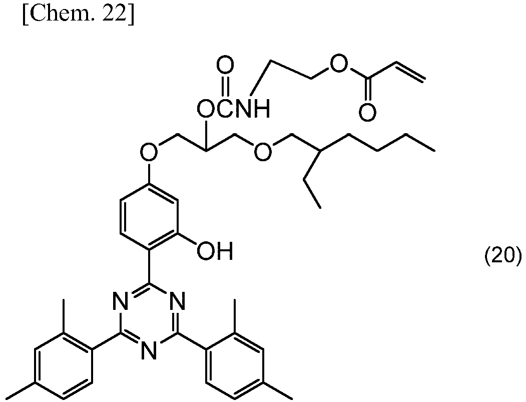

### Component (C)

| | |
|---|---|
| C-1: | (2,4,6-Trimethylbenzoyl)diphenylphosphine oxide (BASF) |
| C-2: | 1-Hydroxycyclohexyl phenyl ketone (Irgacure 184, from BASF) |

### Component (D)

| | |
|---|---|
| D-1: | The acryloyl group-containing organopolysiloxane obtained in Synthesis Example 4 |
| D-2: | An acryloyl group-containing organopolysiloxane (KR-513, from Shin-Etsu Chemical Co., Ltd.) |
| D-3: | The surface-treated silica particles obtained in Synthesis Example 5 (32 wt% methyl ethyl ketone dispersion) |

### Component (E)

| | |
|---|---|
| E-1: | Dipentaerythritol hexaacrylate (MIRAMER M600, from MIWON) |
| E-2: | 1,6-Hexanediol diacrylate (A-HD-N, from Shin-Nakamura Chemical Co., Ltd.) |

### Component (F)

| | |
|---|---|
| F-1: | A polyether silicone-type leveling agent (Leveling Agent A, from Shin-Etsu Chemical Co., Ltd.) |
| F-2: | The perfluoropolyether group-containing acrylate compound of formula (21) below obtained by the method described in Example 1 of JP No. 4873666 |

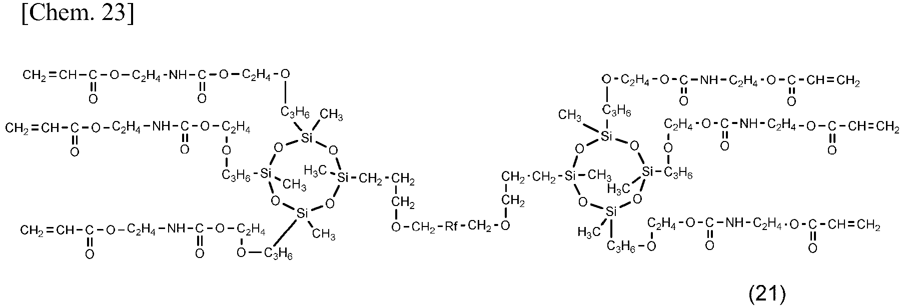

Rf: -CF₂(OCF₂CF₂)ₚ(OCF₂)_{q}OCF₂- (p/q = 0.9, p+q ≈ 45)

| | |
|---|---|
| F-3: | The organopolysiloxane of formula (22) below obtained by the method described in Synthesis Example 1 of WO 2022/065019 A1 |

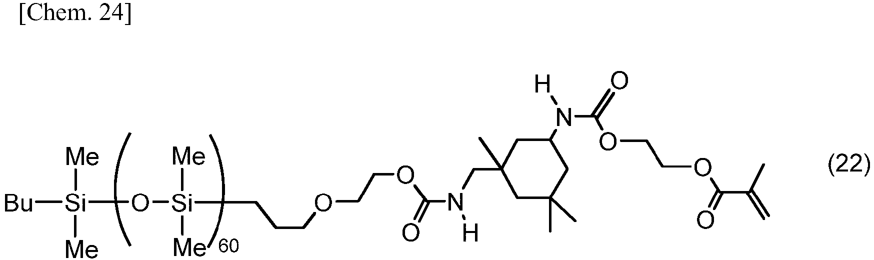

(wherein Me stands for a methyl group and Bu stands for a n-butyl group)

### (G) Solvent

| | |
|---|---|
| G-1: | Propylene glycol monomethyl ether (PGM) |

**[Table 1]**

| Example | | 1-1 | 1-2 | 1-3 | 1-4 | 1-5 | 1-6 | 1-7 | 1-8 |
|---|---|---|---|---|---|---|---|---|---|
| Coating composition | | X1 | X2 | X3 | X4 | X5 | X6 | X7 | X8 |
| Component A | A-1 | 12 | | | 8 | | | | |
| | A-2 | | 12 | | | 9 | | 7 | 8 |
| | A-3 | | | 6 | | | 10 | | |
| Component B | B-1 | 3 | | | | | | | |
| | B-2 | | 3 | 3 | 3 | 3 | 3 | 3 | 3 |
| Component C | C-1 | 0.23 | 0.23 | 0.23 | 0.23 | 0.23 | 0.23 | 0.23 | 0.23 |
| | C-2 | 0.23 | 0.23 | 0.23 | 0.23 | 0.23 | 0.23 | 0.23 | 0.23 |
| Component D | D-1 | | | 6 | 3 | | 2 | 3 | |
| | D-2 | | | | | 3 | | | 1 |
| | D-3 | | | | | | | 3.3 | 6.7 |
| Component E | E-1 | | | | 1 | | | 1 | 2 |
| | E-2 | | | | | 2 | 2 | | 1 |
| Component F | F-1 | 0.01 | 0.01 | 0.01 | 0.01 | 0.01 | 0.01 | 0.01 | 0.01 |
| | F-2 | | | | | | 0.01 | | 0.01 |
| | F-3 | | | | | | | 0.03 | |
| Component G | G-1 | 22 | 22 | 22 | 22 | 22 | 22 | 21 | 18 |
| Component (A) content within nonvolatile matter | | 78% | 78% | 39% | 52% | 52% | 57% | 45% | 45% |

**[Table 2]**

| Comparative Example | | 1-1 | 1-2 | 1-3 | 1-4 | 1-5 |
|---|---|---|---|---|---|---|
| Coating composition | | R1 | R2 | R3 | R4 | R5 |
| Component A | A-1 | | | | | 5 |
| | A-2 | | | 9 | 4 | |
| | A'-4 | | 12 | | | |
| Component B | B-2 | 3 | 3 | | 3 | 3 |
| Component C | C-1 | 0.23 | 0.23 | 0.23 | 0.23 | 0.23 |
| | C-2 | 0.23 | 0.23 | 0.23 | 0.23 | 0.23 |
| Component D | D-1 | 8 | | | 6 | |
| | D-2 | | | 3 | | 3 |
| | D-3 | | | | | 6.7 |
| Component E | E-1 | 2 | | | | 3 |
| | E-2 | 1 | | 2 | 2 | 1 |
| Component F | F-1 | 0.01 | 0.01 | 0.01 | 0.01 | 0.01 |
| | F-3 | | | | 0.01 | |
| Component G | G-1 | 22 | 22 | 22 | 18 | 22 |
| Component (A) content within nonvolatile matter | | 0% | 78% | 62% | 26% | 28% |

### [Examples 2-1 to 2-8, Comparative Examples 2-1 to 2-5]

The coating compositions obtained in the above Examples and Comparative Examples were applied by the curtain coating process onto the surface of a polycarbonate NF-2000 sheet (2 mm (T) × 15 cm (L) × 10 cm (W)) from Mitsubishi Engineering-Plastics Corporation, following which it was air-dried for 5 minutes and heated for 1 minute at 80°C. The film was then cured by light irradiation at an exposure dose of 600 mJ/cm² using a high-pressure mercury vapor lamp. The following evaluations were carried out on the resulting test pieces. The results are shown in Tables 3 and 4.

### (1) Film Appearance

The film was visually examined and was rated according to the presence or absence of abnormalities.
○: No abnormalities
Δ: Discoloration
×: Abnormalities such as foreign matter, unevenness, cracks or peeling are present

### (2) Haze

The haze of the coated sheet was measured using the NDH 5000 SP haze meter from Nippon Denshoku Industries Co., Ltd.

### (3) Steel Wool Resistance

Using the AB-301 Gakushin-type abrasion tester from Tester Sangyo Co., Ltd. in which steel wool No. 0000 was mounted, the haze after 11 back-and-forth rubbing cycles under a load of 500 g was measured. The difference in haze before and after the test was treated as the abrasion resistance. A haze difference of 7 or below was regarded as acceptable.

### (4) Water Contact Angle

Using the DM-701 fully automated contact angle meter from Kyowa Interface Science Co., Ltd., a 2 µL droplet of pure water was deposited on the film and the contact angle at that time was measured. A contact angle of 95° or more was regarded as acceptable.

### (5) Permanent Marker Wipeability

After drawing an approximately 2 cm line on the film using a black HI Mckee^{®} from Zebra Co., Ltd., the film was wiped twice with a Kaydry^{®} wipe from Nippon Paper Crecia Co., Ltd., and the appearance was visually examined and rated according to the following criteria.
O: Clearly wipes off with no remaining marks
Δ: Largely wipes off, but a mark is observable
×: Substantially does not wipe off

### (6) Weathering Evaluation

Using the W-151 Eye Super UV Tester from Iwasaki Electric Co., Ltd., a 300-hour test was conducted by repeatedly carrying out cycles, each of which consisted of [5 hours at a black panel temperature of 63°C, 50% relative humidity, 50 mW/cm² irradiance and 10 sec/hr of rainfall] → [1 hour at a black panel temperature of 30°C and 95% relative humidity]. Following the weathering test, the film was evaluated with regard to film appearance, haze, water contact angle and permanent marker wipeability.

**[Table 3]**

| Example | | 2-1 | 2-2 | 2-3 | 2-4 | 2-5 | 2-6 | 2-7 | 2-8 |
|---|---|---|---|---|---|---|---|---|---|
| Coating composition | | X1 | X2 | X3 | X4 | X5 | X6 | X7 | X8 |
| Initial evaluation | Film appearance | ○ | ○ | ○ | ○ | ○ | ○ | ○ | ○ |
| | Haze | 1.27 | 0.59 | 2.63 | 1.83 | 0.88 | 2.86 | 1.16 | 1.74 |
| | Steel wool resistance (haze difference) | 6.71 | 3.55 | 2.63 | 4.98 | 1.69 | 0.87 | 1.32 | 1.01 |
| | Water contact angle (°) | 98.5 | 98.3 | 97.4 | 99.7 | 99.2 | 113.7 | 105.0 | 110.6 |
| | Marker wipeability | ○ | ○ | ○ | ○ | ○ | ○ | ○ | ○ |
| Weatherability evaluation | Film appearance | yellowing | ○ | ○ | ○ | ○ | ○ | ○ | ○ |
| | Haze | 1.33 | 1.04 | 2.93 | 2.32 | 1.16 | 2.91 | 1.65 | 2.51 |
| | Water contact angle (°) | 98.5 | 98.6 | 97.7 | 98.6 | 98.2 | 109.1 | 102.6 | 108.4 |
| | Marker wipeability | ○ | ○ | ○ | ○ | ○ | ○ | ○ | ○ |

**[Table 4]**

| Comparative Example | | 2-1 | 2-2 | 2-3 | 2-4 | 2-5 |
|---|---|---|---|---|---|---|
| Coating composition | | R1 | R2 | R3 | R4 | R5 |
| Initial evaluation | Film appearance | ○ | × unevenness | ○ | ○ | ○ |
| | Haze | 0.72 | 1.08 | 0.63 | 0.92 | 1.87 |
| | Steel wool resistance (haze difference) | 2.95 | 9.31 | 1.77 | 3.21 | 8.16 |
| | Water contact angle (°) | 90.5 | 95.2 | 99.7 | 93.6 | 92.6 |
| | Marker wipeability | × | ○ | ○ | Δ | Δ |
| Weatherability evaluation | Film appearance | × cracks | unevenness | × yellowing, peeling | × cracks | ○ |
| | Haze | 0.93 | 1.31 | 2.16 | 1.31 | 2.05 |
| | Water contact angle (°) | 87.3 | 92.6 | 97.8 | 91.6 | 90.7 |
| | Marker wipeability | × | Δ | ○ | Δ | Δ |

Following the weathering tests, the films obtained from coating compositions X1 to X8 in Examples 1-1 to 1-8 had high water contact angles of 95° or more and their permanent marker wipeabilities were also excellent. In particular, the films in Examples 1-2 to 1-8 (coating compositions X2 to X8), in which an acryloyl group-containing ultraviolet absorber was used, did not give rise to yellowing following the weathering test and also had an excellent appearance. These results are presumably due to the suppression of bleeding of the ultraviolet absorber.

On the other hand, the film obtained from the composition in Comparative Example 1-1 (R1) which did not include the organopolysiloxane of component (A) and the films obtained from the compositions in Comparative Examples 1-4 and 1-5 (R4, R5), which had component (A) contents, based on the nonvolatile matter within the composition, below 30 wt%, had poor water contact angles and permanent marker wipeabilities. In addition, cracking arose in some of these films (R1, R4) following the weathering test.

In the film obtained from the composition in Comparative Example 2-1 (R2), in which the organopolysiloxane of component (A) was changed to one in which a = 1, unevenness in the film appearance arose and the abrasion resistance was poor. In addition, decreases in the water contact angle and the permanent marker wipeability were observed following the weathering test.

The film obtained from the composition in Comparative Example 3 (R3), which did not include the ultraviolet absorber serving as component (B), exhibited yellowing and also some peeling following the weathering test.

## Claims

1. A photocurable coating composition comprising:
(A) an organopolysiloxane of formula (1) below 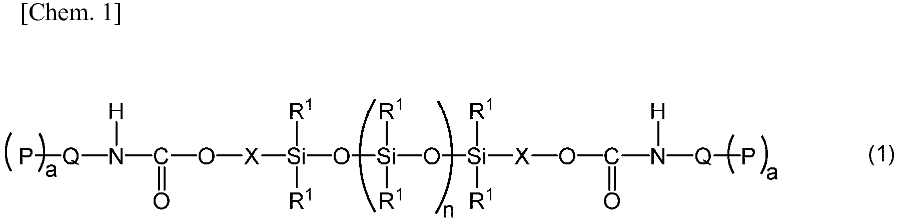 (wherein each R¹ is independently a hydrogen atom or a monovalent hydrocarbon group which may have an intervening oxygen atom,
each X is independently a divalent saturated hydrocarbon group which may have one or more type of intervening atom selected from oxygen, nitrogen, sulfur and phosphorus atoms,
each Q is independently an (a+1)-valent saturated hydrocarbon group which may have one or more type of intervening atom selected from oxygen, nitrogen, sulfur, phosphorus and silicon atoms,
each P is independently an acryloyloxy group or methacryloyloxy group,
each occurrence of the subscript 'a' is independently an integer from 2 to 5, and
n is an integer from 0 to 100);
(B) an ultraviolet absorber, and
(C) a photopolymerization initiator;
wherein the content of component (A) is from 30 to 99 wt% (nonvolatiles basis).

2. The photocurable coating composition of claim 1, wherein R¹ is a methyl group.

3. The photocurable coating composition of claim 1, wherein each X is independently a divalent saturated hydrocarbon group of 2 to 30 carbon atoms which may have an intervening oxygen atom.

4. The photocurable coating composition of claim 3, wherein X is a group of formula (2) below 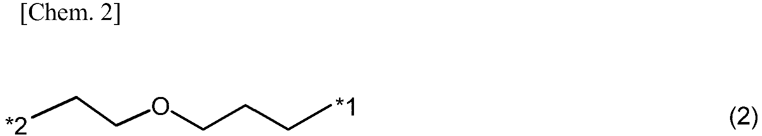 (wherein *1 is bonded to a silicon atom in formula (1) and *2 is bonded to an oxygen atom in a urethane group in formula (1)).

5. The photocurable coating composition of claim 1, wherein each Q is independently an (a+1)-valent saturated hydrocarbon group of 4 to 30 carbon atoms which has a urethane bond.

6. The photocurable coating composition of claim 1, wherein n is an integer from 1 to 80.

7. The photocurable coating composition of claim 1, wherein component (B) is an ultraviolet absorber having a (meth)acryloyl group.

8. The photocurable coating composition of claim 1, further comprising:
(D) one or more substance selected from organopolysiloxanes which have (meth)acryloyl groups and do not have urethane bonds, and silica particles that are surface-modified with an alkoxysilane which has a (meth)acryloyl group and does not have a urethane bond.

9. The photocurable coating composition of claim 1, further comprising:
(E) a (meth)acrylate compound having no silicon atoms (exclusive of component (B)).

10. A cured film of the photocurable coating composition of any one of claims 1 to 9.

11. A coated article comprising a substrate and, formed directly on the substrate or over at least one other layer, the cured film of the photocurable coating composition according to claim 10.

12. The coated article of claim 11, wherein the substrate is an organic resin or wood.
